# EUROPEAN PATENT SPECIFICATION

(11) **EP 2 526 287 B1**
(45) Date of publication and mention of the grant of the patent: **06.07.2016**
(21) Application number: 11701739.2
(22) Date of filing: 19.01.2011
(51) Int. Cl.: F03D 1/06

(54) **A WIND TURBINE ROTOR BLADE HAVING A BUCKLING TRAILING EDGE**
WINDTURBINENROTORBLATT MIT KNICKAUSTRITTSKANTE
PALE DE ROTOR DE TURBINE ÉOLIENNE POSSÉDANT UN BORD DE FUITE RECOURBÉ

(30) Priority: 22.01.2010 US 297290 P; 21.01.2010 DK 201070019
(43) Date of publication of application: 28.11.2012
(73) Proprietor: Vestas Wind Systems A/S, 8200 Aarhus N (DK)
(72) Inventor: HANCOCK, Mark, Southampton Hampshire SO15 5HN (GB)
(74) Representative: Vestas Patents Department
(86) International application number: PCT/DK2011/050015
(87) International publication number: WO 2011/088834

(56) References cited:
- WO-A1-2004/088130
- WO-A2-2010/000263
- FR-A1- 2 898 865

## Description

The present invention relates to a wind turbine rotor blade. In particular, the present invention relates to a wind turbine rotor blade having a trailing edge that is configured to buckle benignly.

Wind turbine rotor blades increase in size with the development of new wind turbines in order to increase the amount of energy that can be captured from the oncoming wind. At present, the length of a rotor blade may be up to 60 meters and it is expected that the rotor blades will extend in length still further. However, the increasing lengths of rotor blades leads to an increase of structural loading on the rotor blade.

A wind turbine rotor blade comprises a root section which connects to the hub of the wind turbine. The root section is typically circular in cross section for strength considerations. The root section blends into an aerodynamic profile along the spanwise length of the rotor blade. During operation of a wind turbine, as the relative velocity of the wind incident on the rotor blade decreases from a tip of the rotor blade to the root of the rotor blade, it is necessary to extend the chordwise width of the rotor blade near to the root of the blade in order to increase the aerodynamic lift in this region.

During operation, the rotor blades of a horizontal axis wind turbine rotate through a substantially vertical plane. The weight of the rotor blade itself generates alternating tensile and compression forces along its length as it rotates which results in cyclic loading of each rotor blade. In particular, the alternating tensile and compression forces are experienced along the leading edge of a blade and along the trailing edge of a blade. These loads are commonly referred to in the art as "edgewise loads", or they are sometimes known as "chordwise loads". The edgewise loads are a result of gravitational loading and this edgewise loading increases from the tip of the blade to the root of the blade.

Edgewise loads are experienced by both the leading and trailing edges. However, as the trailing edge is positioned further from the neutral axis of the rotor blade it experiences higher edgewise stresses than the leading edge.

The rotor blades during operation are also subjected to flapwise loads. "Flapwise" is typically used in the art to refer to the direction substantially normal to the chord of the blade, where the "chord" is the distance between the leading edge and the trailing edge; i.e. the flapwise direction is the direction in which the aerodynamic lift acts. The flapwise direction is perpendicular to the edgewise direction.

It is an aim of the present invention to provide a wind turbine rotor blade that can withstand high edgewise stresses in the trailing edge.

According to a first aspect of the present invention there is provided a wind turbine rotor blade section comprising an airfoil profile between a leading edge and a trailing edge, the rotor blade section comprising:
a first structural member supporting the airfoil profile;
the airfoil profile comprising a trailing edge region spaced from the first structural member in a chordwise direction; wherein
a portion of the trailing edge region of the airfoil profile is configured to buckle, in use, when the rotor blade section is subjected to reverse edgewise loading.
The rotor blade section is a spanwise section of the whole rotor blade. For example, the rotor blade section may be between 5% and 80% of the length of the entire rotor blade.

The portion of the trailing edge region is allowed to buckle benignly. In a baseline wind turbine rotor blade, the trailing edge is designed not to buckle. In the baseline rotor blade, the trailing edge is made sufficiently stiff so that it resists buckling. However, if the trailing edge of the baseline rotor blade is exposed to extreme loading, the trailing edge may buckle with catastrophic results. In the present invention, the trailing edge is designed to buckle in a benign manner so that a failure of the rotor blade is prevented. This is advantageous in that failure of the rotor blade is prevented, and the structural strength of the trailing edge may be reduced. By reducing the structural strength of the trailing edge means that less material is used in the manufacture of the trailing edge, thus saving on the bill of materials and self-weight loads for the rotor blade.

By "reverse edgewise loading" is meant the loads that are caused when the trailing edge of the rotor blade is subjected to a compressive load, and the leading edge of the rotor blade section is subjected to a tensile load.

In particular, the portion of the trailing edge is configured to buckle when the rotor blade section is subjected to extreme reverse edgewise loading. The edgewise loading on the rotor blade is caused by gravity, aerodynamic loads and dynamic loads. The edgewise loading may become extreme as a result of wind gusts or turbulence for instance. By "extreme" edgewise loading may mean edgewise loading that is typically 3 x gravity or greater. The extreme edgewise loading is a dynamic instantaneous extreme loading, for instance, the peak edgewise loading may exist for only 0.1 seconds. Such an extreme loading may occur only once in 50 years.

The first structural member may be a spar which connects a windward and a leeward skin of the airfoil profile. The spar may be formed in a hollow box shape, with two spar caps and two shear webs as is well known in the art. Alternatively, the spar may be formed with a single shear web which extends between the windward skin and the leeward skin.

Preferably, the portion of the trailing edge region is configured to buckle in a flapwise direction. The trailing edge region will buckle so that it deforms out of plane, in that the trailing edge will assume a shape in the flapwise direction.

Preferably, at least part of the airfoil profile is formed from a windward skin and a leeward skin extending from the leading edge to the trailing edge; wherein;
the windward skin and the leeward skin in the trailing edge region have a thickness that is less than the thickness of the windward skin and the leeward skin in a forward part of the airfoil profile. By "forward part of the airfoil profile" is meant the part of the rotor blade section that is upwind of the trailing edge region and that is not designed to buckle.

Preferably, a thickness of the windward skin and the leeward skin in the trailing edge region is less than 50% of the thickness of the windward skin and the leeward skin in a forward part of the airfoil profile. The trailing edge region has a low spanwise stiffness compared to the baseline rotor blade so that it can buckle to relieve local edgewise stresses benignly. The thickness of the windward skin and the leeward skin in the trailing edge region may be between 5% and 50%, such as 10%, of the thickness of the windward skin and the leeward skin in a forward part of the airfoil profile.

Preferably, a second structural member supporting the airfoil profile disposed between the first structural member and the trailing edge is provided. The first structural member may be a main spar supporting the airfoil profile and the second structural member may be a rear spar located near the trailing edge region. A rear spar is sometimes necessary in a large blade (i.e. over 40 meters in length) to support the large chord of the rotor blade section.

The airfoil profile between the leading edge and the second structural member has may have substantially zero camber. The "camber" is the asymmetry between the leeward and windward skins of the airfoil profile. When the camber is zero, the airfoil profile is symmetrical. By having zero camber in the forward part of the airfoil profile means that the forward part is more stable against buckling, or less buckling resisting material needs to be used in the forward part.

The airfoil profile between the second structural member and the trailing edge may have camber. The camber is provided in the trailing edge region so that the airfoil profile will generate aerodynamic lift.

The trailing edge region may be arranged to be fixed to the second structural member. For example, the trailing edge region may be manufactured separately from the rest of the rotor blade section. Once the forward part of the rotor blade has been manufactured, the trailing edge region may be connected to the second structural member. This will save on manufacturing and transport costs.

According to a second aspect of the present invention there is provided a wind turbine rotor blade comprising the wind turbine rotor blade section as described above, wherein:
the first and second structural members and the trailing edge are configured to transmit reverse edgewise loads from a tip end to a root end of the rotor blade; and wherein
the portion of the trailing edge is configured to buckle in use, when the rotor blade is subjected to reverse edgewise loading, such that the transmittal of edgewise loads in the trailing edge portion is transferred away from the trailing edge portion to the rest of the wind turbine blade structure.

The first and second structural members are formed as a principal load being structure. When the trailing edge buckles in use, the loads in the trailing edge portion are transferred to the principal load bearing structure.

The portion of the trailing edge may be configured to buckle in use, when the rotor blade is subjected to reverse edgewise loading, such that the transmittal of edgewise loads in the trailing edge portion is transferred away from the trailing edge portion to the first structural member and the second structural member.

A wind turbine generator may comprise a rotor hub supported by a tower, and further comprising at least one rotor blade according as described above connected to the rotor hub. Such a wind turbine generator is a three bladed horizontal axis machine.

An example of the invention will now be described with reference to the accompanying drawings in which:
Figure 1 illustrates a plan view of a wind turbine rotor blade.
Figure 2 illustrates a cross sectional view of a wind turbine rotor blade along the line II-II of Figure 1.
Figures 3a, 3b, 3c and 3d illustrate schematic views of a trailing edge section of a wind turbine blade.
Figure 4 illustrates a cross sectional view of a wind turbine rotor blade having a thin trailing edge region.
Figure 5 illustrates a cut-away section of a wind turbine rotor blade.
Figure 6 illustrates a cut-away section of a wind turbine rotor blade.

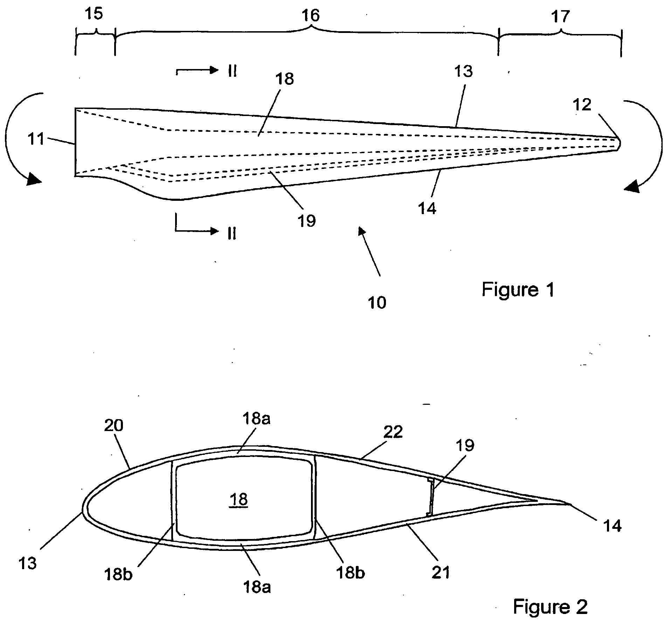

Figures 1 and 2 show a plan view and a cross sectional view respectively of a wind turbine rotor blade 10. The blade 10 comprises a root end 11 for connection to a wind turbine hub (not shown) and a tip end 12. The blade 10 further comprises a leading edge 13 and a trailing edge 14. The region 15 is designated in this invention as the root end region of the rotor blade 10 and in this region, the cross-section of the blade is substantially circular. The region 16 may be referred to as the mid-blade region. A tip region is shown at 17. The root end region 15 may extend from the root end 11 to between 3% and 5% of the total span of the blade 10. The tip region 17 may extend from the tip end 12 to between 20% and 50% of the blade 10 span, from the tip end. Therefore, the mid span region 16 may extend from 3% to 5% from the blade root 11 to 50% to 80% from the blade root. The tip region 17 can be characterised as the spanwise part of the blade 10 that is not subjected to high edgewise loads.

As shown in Figure 2, the blade 10 comprises a first structural member 18 which is formed as a spar. The spar 18 comprises an upper and lower spar cap 18a and a leading and trailing shear web 18b to form a hollow box section which may extend from the root end 11 in the direction of the tip 12. The spar 18 is used to transfer load from the rotor blade 10 to the hub of the wind turbine. Such loads can be tensile and compression forces or torque. The spar 18 is formed from composite materials, in this example, glass and carbon reinforcing fibres set in a thermoset resin matrix.

An aerodynamic shell 20 provides the aerodynamic profile and is supported by the spar 18. The shell comprises a windward skin 21 and a leeward skin 22, each of which extend from the leading edge 13 to the trailing edge 14. The shell may be formed from a composite material such as glass fibres embedded in a thermoset resin matrix. In an example not shown, the spar 18 may form part of the external aerodynamic profile.

As shown in Figure 2, a second structural member 19 is provided. The second structural member is a rear or trailing edge spar formed from carbon and glass fibre embedded in a thermoset resin matrix. The rear spar 19 acts as an additional stiffening mechanism in the trailing edge region of the blade 10. As shown by the dashed lines in Figure 1, the rear spar 19 is integral with the spar 18 in the root end region 15 of the blade 10 and extends along the length of the blade towards the tip end 12. In an example not shown, the rear spar 19 may form part of the external aerodynamic profile.

During operation of the wind turbine, when the blade 10 is subjected to reverse edgewise loading (as indicated by the curved arrows in Figure 1) the trailing edge 14 of the blade is subjected to a compressive force and the leading edge 13 is subjected to a tensile force. This compressive force on the trailing edge 14 may cause failure of the trailing edge, for example by uncontrolled buckling, if the bond between the windward 21 and leeward 22 skins breaks.

The trailing edge 14 of the blade 10 is configured so that it undergoes a benign buckling under certain load conditions. In this example, the trailing edge is designed so that it buckles at extreme reverse edgewise loads. The construction of the blade 10 so that is designed to undergo a benign deflection is described further below.

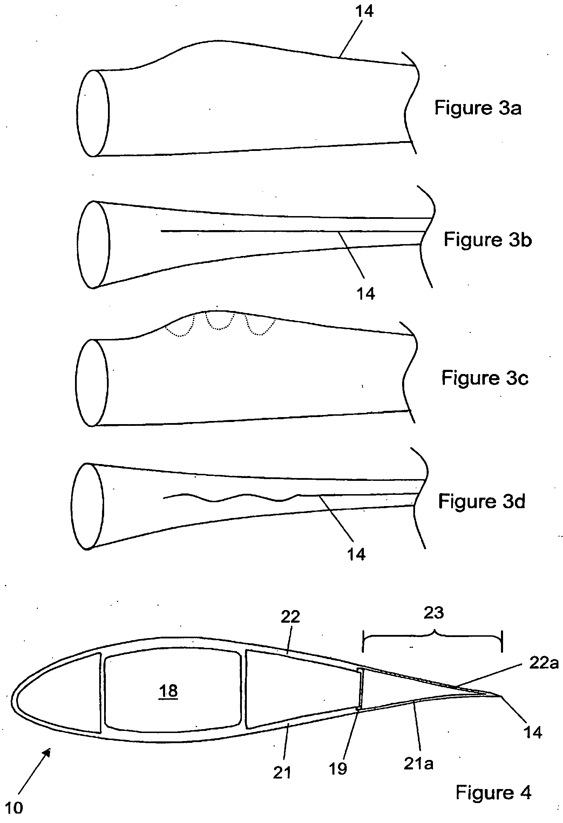

Figures 3a to 3d show schematically how the trailing edge may buckle under extreme reverse edgewise loads. Figures 3a and 3b show a portion of a blade 10 subjected to no edgewise loading and it can be seen that the trailing edge 14 has not buckled. In Figures 3c and 3d, an extreme reverse edgewise load has been applied and it can be seen that the trailing edge 14 has buckled. The trailing edge 14 buckles in the mid-blade region 16 as defined above in Figure 1. By designing the blade 10 so that the trailing edge 14 is designed to buckle benignly without damage means that when the blade is subjected to extreme reverse edgewise loading, the buckling results in an unloading of the forces. Although the trailing edge 14 undergoes buckling, this does not have a significant effect on the aerodynamic properties of the blade. Furthermore, as the main structural loads of the blade 10 are substantially carried through the spar 18 and the rear spar 19, the buckling of the trailing edge 14 does not have a negative effect on transmissions of loads along the length of the blade.

The bucking of the trailing edge 14 results in the trailing edge "collapsing". The structural integrity of the trailing edge 14 is lost when the trailing edge buckles, but the loss of structural integrity is not a result of material failure. The buckling is an elastic deformation of the trailing edge 14 which results in a deflection of the trailing edge in the flapwise direction, i.e. the deflection is perpendicular to the edgewise load along the trailing edge 14. The trailing edge 14 does not experience plastic deformation. When the edgewise load that caused the trailing edge 14 to buckle is reduced, the trailing edge will spring back to its undeformed shape.

Figure 4 illustrates an example of how the trailing edge 14 is designed to buckle. A trailing edge region 23 downwind of the rear spar 19 in the mid-blade region 16 is defined. In the trailing edge region the windward skin 21a and the leeward skin 22a are thin relative to the skin thickness in the rest of the airfoil profile. In this example, the windward skin 21a and the leeward skin 22a are formed from a single sheet of fibre glass reinforced polymer. In the rest of the airfoil profile, the skins are formed from multiple sheets of fibre glass reinforced polymer. The skins 21a and 22a have a low bending stiffness compared to the bending stiffness of the rest of the airfoil profile. Although the trailing edge region 23 in the mid-blade region 16 is only formed from a thin skin of composite, such as a single skin of composite, it has sufficient strength to maintain its shape due to the triangular nature of the trailing edge region 23, where the triangular shape is formed from the skins 21a and 22a and the rear spar 19.

In an example, the chord of the rotor blade 10 is between 2 and 5 meters in the region where it designed to buckle. The thickness of the skins 21, 22 forward of the rear spar 19 is between 1% and 4% of the chordwise dimension, i.e. between 20mm and 80mm thick for a 2m chord. The thickness of the skins 21a, 22a in the trailing edge region 23 is between 0.1% and 0.4% of the chordwise dimension, i.e. between 2mm and 8mm for a 2m chord.

When the trailing edge region 23 is subjected to the design loads for the wind turbine, the trailing edge region maintains its triangular shape and it forms part of the aerodynamic profile of the blade. However, when subjected to extreme reverse edgewise loads, the trailing edge region 23 will buckle. When the trailing edge region 23 has buckled, it will not transmit any significant part of the reverse edgewise loads. The trailing edge region 23 may also be designed to promote controlled and predicable buckling. Such designs may include gentle curves and a composite layup of thick and thin laminates to promote exactly where the trailing edge will buckle.

In normal use, that is when the rotor blade 10 is not subjected to extreme reverse edgewise loads, the reverse edgewise loads are transmitted from the tip 12 of the blade towards the root 11 of the blade. In a typical example, the trailing edge 14 transmits 5% of the reverse edgewise loads and the spar 18, the rear spar 19 and the skins transmit the remaining 95% of the reverse edgewise loads. When the trailing edge 14 buckles due to extreme reverse edgewise loading, the trailing edge will now no longer transmit any loads and the spar 18, the rear spar 19 and the skins outside the trailing edge region 23 will transmit substantially all of the reverse edgewise loading.

Of course, the airfoil profile will change when the trailing edge 14 buckles. However, as it buckles during extreme reverse edgewise loading, it is not critical to maintain an optimum aerodynamic profile because it only buckles for a short time (such as 0.1 seconds) and it will happen rarely (such as once in 50 years).

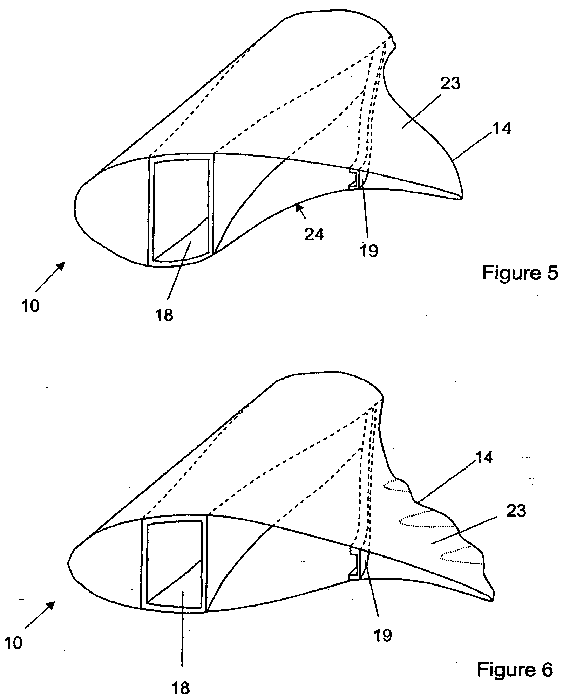

As can be seen from the cross section of the blade 10 in Figure 2, the airfoil profile is unsymmetrical, i.e. it has camber. Figure 5 shows how the trailing edge 14 may buckle with an unsymmetrical airfoil profile. In Figure 5, the rear spar is supported unsymmetrical in that it is closer to the leeward side than the windward side. As a reverse edgewise load is applied to the blade 10, the rear spar is loaded in compression, and as described above, the trailing edge 14 is designed to buckle. If the reverse edgewise load is too high, it may cause the windward side to collapse inwards as shown by the arrow 24 which will cause the rear spar 19 to deflect towards the windward side.

However, in a further example of the invention, and as shown in Figure 6, the airfoil profile is now symmetrical between the main spar 18 and the rear spar 19, that is there is zero camber, or substantially zero camber, between the main spar 18 and the rear spar 19. The trailing edge region downwind of the rear spar may also be symmetrical, or it may be unsymmetrical as shown in Figure 6. In other words, in Figure 6, all the camber is in the trailing edge region 23 of the blade 10. In the example shown in Figure 6, the likelihood of the rear spar 19 buckling is reduced because the load bearing structure is symmetrical and it is unlikely that the windward (or leeward) side will collapse inwards. Thus, only the trailing edge region 23 will buckle as per its intended design.

In a further example, the trailing edge region 23 is designed so that it is manufactured separately from the rest of the rotor blade 10. This will result in simplified manufacture and simplified transport. The trailing edge region can then be assembled to the rest of the rotor blade 10 when the wind turbine is installed. The trailing edge region 23 may be connected to the rear spar 19 through mechanical fixings such as bolts or by adhesive.

## Claims

1. A wind turbine rotor blade section comprising an airfoil profile between a leading edge (13) and a trailing edge (14), the rotor blade section comprising:
a first structural member (18) supporting the airfoil profile;
the airfoil profile comprising a trailing edge region (23) spaced from the first structural member (18) in a chordwise direction; **characterised in that**:
a portion of the trailing edge region (23) of the airfoil profile is configured to buckle benignly and the trailing edge does not experience plastic deformation, in use, when the rotor blade section is subjected to extreme reverse edgewise loading.

2. A wind turbine rotor blade section according to claim 1, wherein the portion of the trailing edge region (23) is configured to buckle in a flapwise direction

3. A wind turbine rotor blade section according to claim 1 or claim 2, wherein at least part of the airfoil profile is formed from a windward skin (21) and a leeward skin (22) extending from leading edge (13) to the trailing edge (4); wherein;
the windward skin (21a) and the leeward skin (22a) in the trailing edge region (23) have a thickhess that is less than the thickness of the windward skin and the leeward skin in a forward part of the airfoil profile.

4. A wind turbine rotor blade section according to claim 3, wherein a thickness of the winbdward skin (21a) and the leeward skin (22a) in the trailing edge region (23) is less than 50% of the thickness of the windward skin and the leeward skin in a forward part of the airfoil profile.

5. A wind turbine rotor blade a section according to any one of the preceding claims, further comprising:
a second structural member (19) supporting the airfoil profile disposed between the first structural member (18) and the trailing edge (14).

6. A wind turbine rotor blade section according to any one of the preceding claims, wherein the airfoil profile between the leading edge (13) and the second structural member (18) has substantially zero camber.

7. A wind turbine rotor blade section according to claim 5 and claim 6, wherein the airfoil profile between the second structural member (19) and the trailing edge (14) has camber.

8. A wind turbine rotor blade section according to claim 5, wherein the trailing edge region (23) is arranged to be fixed to the second structural member (19).

9. A wind turbine rotor blade (10) comprising the wind turbine rotor blade section according to any one of claims 5 to 8, wherein:
the first (18) and second (19) structural members and the trailing edge (14) are configured to transmit reverse edgewise loads from a tip end (12) to a root end (11) of the rotor blade; and wherein
the portion of the trailing edge is configured to buckle in use, when the rotor blade is subjected to reverse edgewise loading, such that the transmittal of edgewise loads in the trailing edge portion is transferred away from the trailing edge portion to the rest of the wind turbine blade structure.

10. A wind turbine rotor blade (10) according to claim 9, wherein the portion of the trailing edge is configured to buckle in use, when the rotor blade is subjected to reverse edgewise loading, such that the transmittal of edgewise loads in the trailing edge portion is transferred away from the trailing edge portion to the first structural member and the second structural member.

11. A wind turbine generator comprising a rotor hub supported by a tower, and further comprising at least one rotor blade (10) according to claim 9 or claim 10 connected to the rotor hub.

## Patentansprüche

1. Ein Windturbinenrotorblattabschnitt, der ein Tragflächenprofil zwischen einer Vorderkante (13) und einer Hinterkante (14) aufweist, wobei der Rotorblattabschnitt aufweist:
ein erstes strukturelles Element (18), das das Tragflächenprofil stützt;
wobei das Tragflächenprofil einen Hinterkantenbereich (23) aufweist, der von dem ersten strukturellen Element (18) in Profilsehnenrichtung beabstandet ist; **dadurch gekennzeichnet, dass**:
ein Teil von dem Hinterkantenbereich (23) von dem Tragflächenprofil konfiguriert ist, um sich wohlwollend zu verbiegen, und die Hinterkante keine plastische Verformung erfährt, während einer Verwendung, wenn der Rotorblattabschnitt einer extremen reversen seitlichen Belastung ausgesetzt ist.

2. Ein Windturbinenrotorblattabschnitt nach Anspruch 1, wobei der Teil von dem Hinterkantenbereich (23) konfiguriert ist, um sich in einer klappenwärtigen ("flapwise") Richtung zu verbiegen.

3. Ein Windturbinenrotorblattabschnitt nach Anspruch 1 oder Anspruch 2, wobei wenigstens ein Teil von dem Tragflächenprofil aus einer luvwärtigen Haut (21) und einer leewärtigen Haut (22) gebildet ist, die sich von der Vorderkante (13) zu der Hinterkante (14) erstreckt; wobei:
die luvwärtige Haut (21a) und die leewärtige Haut (22a) in dem Hinterkantenbereich (23) eine Dicke haben, die geringer als die Dicke von der luvwärtigen Haut und der leewärtigen Haut in einem vorderen Teil von dem Tragflächenprofil ist.

4. Ein Windturbinenrotorblattabschnitt nach Anspruch 3, wobei eine Dicke von der luvwärtigen Haut (21a) und der leewärtigen Haut (22a) in dem Hinterkantenbereich (23) weniger als 50 % von der Dicke von der luvwärtigen Haut und der leewärtigen Haut in einem vorderen Teil von dem Tragflächenprofil ist.

5. Ein Windturbinenrotorblattabschnitt nach einem der vorangegangenen Ansprüche, weiter aufweisend:
ein zweites strukturelles Element (19), das das Tragflächenprofil stützt, das zwischen dem ersten strukturellen Element (18) und der Hinterkante (14) angeordnet ist.

6. Ein Windturbinenrotorblattabschnitt nach einem der vorangegangenen Ansprüche, wobei das Tragflächenprofil zwischen der Hinterkante (13) und dem zweiten strukturellen Element (18) im Wesentlichen null Wölbung hat.

7. Ein Windturbinenrotorblattabschnitt nach Anspruch 5 und Anspruch 6, wobei das Tragflächenprofil zwischen dem zweiten strukturellen Element (19) und der Hinterkante (14) eine Wölbung hat.

8. Ein Windturbinenrotorblattabschnitt nach Anspruch 5, wobei der Hinterkantenbereich (23) dafür vorgesehen ist, um an dem zweiten strukturellen Element (19) befestigt zu werden.

9. Ein Windturbinenrotorblatt (10), das den Windturbinenrotorblattabschnitt nach einem der Ansprüche 5 bis 8 aufweist, wobei:
die ersten (18) und zweiten (19) strukturellen Elemente und die Hinterkante (14) konfiguriert sind, um reverse seitliche Belastungen von einem Spitzenende (12) zu einem Wurzelende (11) von dem Rotorblatt zu übertragen; und wobei
der Abschnitt von der Hinterkante konfiguriert ist, um sich bei einer Verwendung zu verbiegen, wenn das Rotorblatt einer reversen seitlichen Belastung ausgesetzt ist, so dass die Übertragung von seitlichen Belastungen in dem Hinterkantenabschnitt weg von dem Hinterkantenabschnitt zu dem Rest von der Windturbinenblattstruktur transferiert wird.

10. Ein Windturbinenrotorblatt (10) nach Anspruch 9, wobei der Teil von der Hinterkante konfiguriert ist, um sich bei einer Verwendung zu verbiegen, wenn das Rotorblatt einer reversen seitlichen Belastung ausgesetzt wird, so dass die Übertragung von seitlichen Belastungen in dem Hinterkantenabschnitt weg von dem Hinterkantenabschnitt zu dem ersten strukturellen Element und dem zweiten strukturellen Element transferiert wird.

11. Ein Windturbinengenerator, der eine durch einen Turm gestützte Gondel aufweist und weiter wenigstens ein Rotorblatt (10) nach Anspruch 9 oder Anspruch 10 aufweist, das mit der Gondel verbunden ist.

## Revendications

1. Section de pale de rotor d'éolienne comprenant un profil aérodynamique entre un bord d'attaque (13) et un bord de fuite (14), la section de pale de rotor comprenant :
un premier élément structurel (18) supportant le profil aérodynamique ;
le profil aérodynamique comprenant une région de bord de fuite (23) éloignée du premier élément structurel (18) dans une direction de corde ;
**caractérisée en ce que** :
une partie de la région de bord de fuite (23) du profil aérodynamique est configurée pour fléchir de façon bénigne et le bord de fuite ne subit pas de déformation plastique, en utilisation, lorsque la section de pale de rotor est soumise à une charge inverse extrême dans la direction longitudinale.

2. Section de pale de rotor d'éolienne selon la revendication 1, dans laquelle la partie de la région de bord de fuite (23) est configurée pour fléchir dans une direction transversale.

3. Section de pale de rotor d'éolienne selon la revendication 1 ou la revendication 2, dans laquelle au moins une partie du profil aérodynamique est formée à partir d'un revêtement face au vent (21) et d'un revêtement sous le vent (22) s'étendant du bord d'attaque (13) au bord de fuite (14) ; dans laquelle :
le revêtement face au vent (21a) et le revêtement sous le vent (22a) dans la région de bord de fuite (23) ont une épaisseur qui est inférieure à l'épaisseur du revêtement face au vent et du revêtement sous le vent dans une partie avant du profil aérodynamique.

4. Section de pale de rotor d'éolienne selon la revendication 3, dans laquelle une épaisseur du revêtement face au vent (21a) et du revêtement sous le vent (22a) dans la région de bord de fuite (23) est inférieure à 50 % de l'épaisseur du revêtement face au vent et du revêtement sous le vent dans une partie avant du profil aérodynamique.

5. Section de pale de rotor d'éolienne selon l'une quelconque des revendications précédentes, comprenant en outre :
un second élément structurel (19) supportant le profil aérodynamique disposé entre le premier élément structurel (18) et le bord de fuite (14).

6. Section de pale de rotor d'éolienne selon l'une quelconque des revendications précédentes, dans laquelle le profil aérodynamique entre le bord d'attaque (13) et le second élément structurel (18) présente une cambrure sensiblement nulle.

7. Section de pale de rotor d'éolienne selon la revendication 5 et la revendication 6, dans laquelle le profil aérodynamique entre le second élément structurel (19) et le bord de fuite (14) présente une cambrure.

8. Section de pale de rotor d'éolienne selon la revendication 5, dans laquelle la région de bord de fuite (23) est agencée pour être fixée au second élément structurel (19).

9. Pale de rotor d'éolienne (10) comprenant la section de pale de rotor d'éolienne selon l'une quelconque des revendications 5 à 8, dans laquelle :
les premier (18) et second (19) éléments structuraux et le bord de fuite (14) sont configurés pour transmettre des charges inverses dans la direction longitudinale d'une extrémité de pointe (12) vers une extrémité d'emplanture (11) de la pale de rotor ; et dans laquelle
la partie du bord de fuite est configurée pour fléchir en utilisation, lorsque la pale de rotor est soumise à une charge inverse dans la direction longitudinale, de sorte que la transmission de charges dans la direction longitudinale dans la partie de bord de fuite soit transférée de la partie de bord de fuite au reste de la structure de pale d'éolienne.

10. Pale de rotor d'éolienne (10) selon la revendication 9, dans laquelle la partie du bord de fuite est configurée pour fléchir en utilisation, lorsque la pale de rotor est soumise à une charge inverse dans la direction longitudinale, de sorte que la transmission de charges dans la direction longitudinale dans la partie bord de fuite soit transférée de la partie de bord de fuite au premier élément structurel et au second élément structurel.

11. Eolienne comprenant un moyeu de rotor supporté par une tour, et comprenant en outre au moins une pale de rotor (10) selon la revendication 9 ou la revendication 10 reliée au moyeu de rotor.
